# EUROPÄISCHE PATENTSCHRIFT

(11) **EP 2 869 989 B1**
(45) Veröffentlichungstag und Bekanntmachung des Hinweises auf die Patenterteilung: **29.04.2020**
(21) Anmeldenummer: 13744445.1
(22) Anmeldetag: 12.06.2013
(51) Int. Cl.: B32B 17/10, F41H 5/04

(54) **DURCHSCHUSSHEMMENDES VERBUNDGLAS**
BULLET-RESISTANT LAMINATED GLASS
VITRAGE DE SÉCURITÉ ANTI-BALLES

(30) Priorität: 03.07.2012 DE 102012105900
(43) Veröffentlichungstag der Anmeldung: 13.05.2015
(73) Patentinhaber: SCHOTT AG, 55122 Mainz (DE)
(72) Erfinder: PANZER, Gerrit, 07407 Rudolstadt (DE); FREITAG, Rüdiger, 36433 Moorgrund/Etterwinden (DE); LAUTENSCHLÄGER, Gerhard, 07743 Jena (DE); NEUPERT, Georg, 07751 Jena-Drackendorf (DE)
(74) Vertreter: Herrmann, Jochen
(86) Internationale Anmeldenummer: PCT/EP2013/062149
(87) Internationale Veröffentlichungsnummer: WO 2014/005813

(56) Entgegenhaltungen:
- EP-A1- 0 508 864
- EP-A2- 2 520 896
- WO-A1-03/068501
- DE-A1- 19 729 336
- DE-A1-102006 042 538
- DE-B3-102004 062 060
- DE-U1- 9 317 460
- US-A- 3 930 452
- US-A- 4 595 624
- US-A- 4 663 228

## Beschreibung

Die Erfindung betrifft ein durchschusshemmendes Verbundglas mit mindestens drei Glasscheiben, wobei eine der Glasscheiben als Deckscheibe der Angriffseite zugewandt ist, und eine Glasscheibe der Angriffseite abgewandt als Abschlussscheibe ausgebildet ist.

Beschusshemmendes Glas in Form von Verbundglas ist seit vielen Jahrzehnten bekannt. Es besteht üblicherweise aus einer Vielzahl von Glasscheiben, die unter Vermittlung von Folien aneinander gekoppelt sind. Diese Verbundgläser werden in zahlreichen Variationen ausgeführt. Beispielsweise werden sie mit einlaminierten Kunststoffinterlayern oder beschussabgewandt mit splitterbindenden Beschichtungen bzw. Befilmungen ausgerüstet. Teils schließen sie auch beschussabgewandt mit einer Kunststoffscheibe ab. Prüfnormen, auch die europäische Norm EN 1063, unterscheiden innerhalb der einzelnen Beschussklassen in Scheiben "mit Splitterabgang" und "ohne Splitterabgang". Diese unterschiedlichen Klassifizierungen erfordern den Einsatz unterschiedlich dicker Verbundgläser oder unterschiedlichen Glasdesigns.

Um die Normanforderung des splitterabgabefreien Verbundglases im Architekturbereich erfüllen zu können, müssen hohe Verbundglasdicken vorgesehen sein. Insbesondere werden deutlich höhere Glasdicken als bei einem Verbundglas erforderlich, welches lediglich vor Durchschuss schützt. Für Weichkerngeschosse beträgt der Dickenunterschied für Scheiben "mit Splitterabgang" und "ohne Splitterabgang" bis zu 50 % innerhalb der jeweiligen Geschoss- bzw. Beschussklasse. Durch die hiermit bedingte Dicken- und Gewichtszunahme wird die Einsatzfähigkeit der Verbundgläser erschwert bzw. verhindert. Insbesondere sind teilweise Sonderkonstruktionen für Tür-, Fenster- und Rahmensysteme erforderlich. Aufgrund der hohen Gewichte werden spezielle Befestigungen, beispielsweise Scharnierkonstruktionen erforderlich.

Um einer solchen unerwünschten Gewichtszunahme bei Verbundgläsern "ohne Splitterabgang" entgegenzuwirken, wird beschussabgewandt häufig eine Kunststoffplatte aus Polycarbonat, Polymethylmethacrylat oder dergleichen auflaminiert bzw. aufgeklebt. Eine solche Lösung ist in der EP 0 157 646 A2 oder der DE 10 2008 043 718 A1 offenbart.

Es sind weiterhin Verbundgläser bekannt, bei denen beschussabgewandt eine splitterbindende Beschichtung auf das Verbundglas aufgebracht ist. Eine solche Ausgestaltungsvariante ist in der DE 692 27 344 T2 offenbart. Sowohl die aufgebrachte Kunststoffplatte als auch die splitterbindenden Beschichtungen sind mechanisch sensibel, insbesondere nicht kratzfest. Sie lassen sich schlecht und nur mit speziellen Reinigungsmitteln reinigen. Darüber hinaus sind sie alterungsgefährdet, beispielsweise durch UV-Einstrahlung. Dies ist für den Einsatz im Architekturbereich ein gravierender Nachteil.

Aus dem Stand der Technik sind zur Steigerung der ballistischen Leistungsfähigkeit Verbundgläser bekannt, bei denen der Angriffseite zugewandt chemisch oder thermisch vorgespannte Gläser verwendet sind. Diese Gläser bilden dann eine Deckschicht, die das eindringende Geschoss brechen oder dieses verformen. Das Geschoss zerstört dann zwar die Deckscheibe, jedoch kann der rückseitige Splitterabgang durch diese Maßnahme nicht verhindert werden. Daher werden bei diesen Gläsern auch häufig beschussabgewandt Polycarbonat-Scheiben oder dergleichen eingesetzt.

Die nachveröffentlichte EP 2 520 896 A2 offenbart eine durchschusshemmende Brandschutzverglasung, welche einen Verglasungsrahmen aufweist. In dem Verglasungsrahmen ist ein Brandschutzglas aufgenommen, wobei der Verglasungsrahmen das Brandschutzglas mittels Stützprofilen allseitig umgibt. Das Brandschutzglas besteht aus zwei oder mehreren Brandschutzglas-Scheiben, die über Verbindungsschichten, bestehend aus PVB-Folien, miteinander verbunden sind.

US 4,595,625 offenbart ein durchbruchsicheres Glas, wobei drei Glasscheiben unterschiedlicher Dicke mittels Verbundschichten aus PVB-Material miteinander verbunden sind. Einseitig ist eine chemisch vorgespannte Glasscheibe mit einer Dicke von 1,5 mm auf den so gebildeten Glasverband, unter Verwendung einer weiteren PVB-Folie, auflaminiert.

Es ist Aufgabe der Erfindung, ein durchschusshemmendes Verbundglas bereitzustellen, das mit geringem Gewicht einen effektiven Schutz vor Durchschuss und Splitterabgang bietet.

Diese Aufgabe wird mit den Merkmalen des Anspruches 1 gelöst. Demgemäß wird ein durchschusshemmendes Verbundglas vorgeschlagen, das mindestens drei Glasscheiben aufweist, die unter Vermittlung von Verbundschichten aneinander gekoppelt sind. Dabei werden die Verbundschichten in üblicher Weise von biegeschlaffen und forminstabilen Folien und/oder Vergussmassen gebildet. Als biegeschlaffe Folien kommen insbesondere Polyvinylbutyral-Folien zum Einsatz, die eine Schichtdicke kleiner als 2 mm aufweisen. Mitunter werden auch Folien bestehend aus anderen Materialien verwendet, die eine Schichtdicke kleiner als 2 mm aufweisen. Teilweise werden auch mehrere Folien aneinander gelegt, um die Vermittlung zweier benachbarter Glasscheiben zu erreichen. Biegeschlaffe Folien sind mithin durch die Eigenschaften niedriger Elastizitätsmodul (< 100 MPa), und große Verformungen (Reißdehnung > 200%), infolge geringer Kraft- und Momentenbeanspruchungen gekennzeichnet. Derartige biegeschlaffe und forminstabile Folien haben den Vorteil, dass der Verbund auch nach dem Bruch einzelner, mehrerer oder aller Glasscheiben zusammengehalten wird. Vergussmassen eignen sich in besonderer Weise, da damit das Verbundglas einfach hergestellt werden kann. Mit beispielsweise Verbundschichten größer oder gleich 1 mm Stärke können die einzelnen Glasscheiben mechanisch entkoppelt werden.

Erfindungsgemäß ist weiterhin vorgesehen, dass die Abschlussscheibe als chemisch vorgespannte Glasscheibe ausgebildet ist. Diese Glasscheibe schließt mithin das Verbundglas der Angriffseite abgewandt ab.

Bei diesem Aufbau eines Verbundglases wird beim Impakt eines Geschosses zunächst die Deckscheibe und ggf. die an die Deckscheibe anschließende Zwischenscheibe(-n) infolge des Geschosseinschlages gebrochen. Die Geschossenergie wird dabei auf die gebrochenen Scheiben übertragen und es kommt zu einer stoßartigen Biegebelastung, die von der vorgespannten Abschlussscheibe aufgenommen wird. Es hat sich überraschenderweise gezeigt, dass aufgrund der Vorspannung ein Bruch der Abschlussscheibe nicht eintritt. Mithin erfolgt auch kein rückseitiger Splitterabgang. Ein derartiger Aufbau eines Verbundglases zeigt zudem auch einen guten Schutz gegen Sprengwirkung. Bei einer im Bereich der Angriffseite auftreffenden Druckwelle werden an der Abschlussscheibe Zugspannungen erzeugt, die sich infolge der Vorspannung der Abschlussscheibe effektiv abbauen lassen ohne dass hier ein Materialbruch auftritt.

Die Aufgabe der Erfindung wird auch gelöst mit einem durchschusshemmendem Verbundglas mit mindestens drei Glasscheiben, wobei eine der Glasscheiben als Deckscheibe der Angriffseite zugewandt ist, und eine Glasscheibe der Angriffseite abgewandt als Abschlussscheibe ausgebildet ist, wobei zwischen der Deckscheibe und der Abschlussscheibe eine oder mehrere Zwischenscheiben angeordnet sind, wobei die Glasscheiben mittels Verbundschichten, nicht bestehend aus Polycarbonat, Polyurethan oder Polymethylmethacrylat, miteinander verbunden sind. Auch bei dieser Ausführungsvariante ist die Abschlussscheibe als chemisch vorgespannte Glasscheibe ausgebildet.

Es hat sich überraschenderweise gezeigt, dass der Verzicht auf die Verbundschichten, die üblicherweise bei durchschusshemmenden Verbundgläsern eingesetzt sind, und die aus Polycarbonat, Polyurethan oder Polymethylmethacrylat bestehen, eine vorteilhafte Wirkung in Bezug auf die Verhinderung des rückseitigen Splitterabganges erzielt werden kann. Die Energie des auftreffenden Geschosses wird unbeeinflusst von solchen Zwischenschichten derart in die Abschlussscheibe eingebracht, dass diese ohne Bruchgefahr die Geschossenergie sicher abtragen kann. Auch mit dieser Lösung ist ein durchschusshemmendes Verbundglas ohne rückseitigen Splitterabgang erreicht.

Mit den beiden vorgenannten Lösungen für Verbundgläser lassen sich insbesondere Architekturgläser schaffen, die mit geringen Bauteilgewichten realisiert werden können, und die darüber hinaus angriffseitig und auch rückseitig mit Glasmaterial abschließen. Sie sind daher leicht reinigbar, kratzfest und alterungsbeständig. Auf aufwändige Tragkonstruktionen kann aufgrund des geringen Bauteilgewichtes verzichtet werden.

Es hat sich gezeigt, dass eine optimierte Biegebeanspruchung der Abschlussscheibe dann auftritt, wenn die Deckscheibe und die Zwischenscheibe(-n) eine größere Dicke als die Abschlussscheibe aufweisen.

Bei dem Aufbau des Verbundglases können die Glasscheiben von einem Borosilikatglas, einem Kalknatronglas, einem Aluminiumsilikatglas und/oder einem Lithiumaluminosilikatglas gebildet sein. Mithin kann auf handelsübliche Bauteile zurückgegriffen werden. Idealerweise bestehen alle Glasscheiben aus einem Glasmaterial, vorzugsweise aus Borosilikatglas, das sich für diesen Anwendungszweck und bei Beschuss mit Weichkerngeschossen als besonders geeignet gezeigt hat. Insbesondere bevorzugt sollte die Deckscheibe aus Borosilikatglas bestehen um die Auftreffenergie eines Weichkerngeschosses effektiv zu brechen.

Besonders bevorzugt ist die Verbundschicht von einer oder mehreren Folien, bestehend insbesondere aus Polyvinylbutyral, gebildet. Diese Folien können im Autoklavprozess verarbeitet werden und führen zu einer sicheren großflächigen Verbindung der aneinander liegenden Glasscheiben. Die Folien garantieren im Wesentlichen den Zusammenhalt der gebrochenen Glasbauteile nach Einschlag eines Geschosses.

Um die sichere Übertragung der Biegebeanspruchung beim Geschosseinschlag auf die Abschlussscheibe gewährleisten zu können, sollte die Verbundschicht eine Dicke kleiner als 2 mm, insbesondere eine Dicke kleiner als 1 mm, aufweisen. Dicken kleiner als 2 mm gewähren eine hohe Sicherheit gegen rückseitigen Splitterabgang. Sie bilden zudem eine Art elastischer Puffer, der dazu beiträgt die Energie eines auftreffenden Geschosses zu absorbieren. Mit Dicken kleiner als 1 mm sind noch zuverlässigere Betriebswerte erreichbar.

Zur Erfüllung der Normanforderungen nach der DIN EN 1063 sollte die Biegezugfestigkeit der Abschlussscheibe ≥ 100 N/mm² betragen. Besonders bevorzugt liegt die Biegezugfestigkeit oberhalb von 140 N/mm². Dann werden auch gewisse Fertigungsungenauigkeiten im Verbundglas sicher ausgeglichen und es ist stets ein rückseitiger Splitterabgang verhindert. Mit dem Einsatz chemisch vorgespannter Scheiben lassen sich deutlich höhere Festigkeiten erreichen. Dies kann genutzt werden um die Scheibendicke der übrigen Scheiben des Verbundglases zugunsten eines geringeren Gesamtbauteilgewichtes zu reduzieren. Beispielsweise können mit chemisch vorgespannten Gläsern Vorspannungen im Bereich zwischen 500 N/mm² - 1100 N/mm² erreicht werden. Solche chemisch vorgespannten Gläser sind im Rahmen der Erfindung besonders geeignet.

Bei chemisch vorgespannten Abschlussscheiben liegt die Dicke erfindungsgemäß im Bereich zwischen 3 bis 12 mm liegen. Chemisch vorgespannte Scheiben haben den Vorteil, dass sie mit höherer Vorspannung gefertigt werden können und mithin auch größere Biegebeanspruchungen ausgleichen. Damit können die vorgelagerten Glasscheibenschichten mit geringerer Dicke ausgeführt werden, was sich positiv auf das Gesamtbauteilgewicht auswirkt.

Bei der chemisch vorgespannten Abschlussscheibe ist das Verhältnis (x) von der Dicke der Abschlussscheibe, gemessen in [mm], zur Biegezugfestigkeit der Abschlussscheibe, gemessen in N/mm², im Bereich zwischen 1:50 ≤ x ≤ 1:1000, vorzugsweise 1:100 ≤ x ≤ 1:200, gewählt. Diese Abschlussscheiben sind hinsichtlich ihres Gewichtes und der Biegezugfestigkeit derart optimiert, dass die vorgelagerten Glasscheiben mit relativ geringer Dicke ausgeführt werden können. Hierdurch lässt sich das Gesamtbauteilgewicht des Verbundglases optimieren.

Als besonders geeignet haben sich Glaszusammensetzungen der Abschlussscheibe erwiesen, die wie folgt zusammengesetzt sind:

**Aluminosilikatglas, Zusammensetzung in Mol-%**

| | |
|---|---|
| SiO₂ | 63 - 67,5 |
| B₂O₃ | 0,0 - 7,0 |
| Al₂O₃ | 10 - 12,5 |
| Na₂O | 8,5 - 15,5 |
| K₂O | 0 - 4,0 |
| MgO | 2,0 - 9,0 |
| CaO + SrO + ZnO | 0 - 2,5 |
| TiO₂ + ZrO₂ | 0,5 - 1,5 |
| CeO₂ | 0,0 - 0,5 |
| As₂O₃ + Sb₂O₃ | 0,0 - 0,4 |
| SnO₂ | 0,05 - 0,5 |
| F | 0 - 1 |

Alternativ haben sich auch Glaszusammensetzungen für die Abschlussscheiben als geeignet erwiesen, die wie folgt zusammengesetzt sind:

**Lithiumaluminosilikatglas, Zusammensetzung in Mol-%**

| | |
|---|---|
| SiO2 | 60 - 70 |
| Al2O3 | 10 - 13 |
| B2O3 | 0,0 - 0,9 |
| Li2O | 9,6 - 11,6 |
| Na2O | 8,2 -< 10 |
| K2O | 0,0 - 0,7 |
| MgO | 0,0 - 0,2 |
| CaO | 0,2 - 2,3 |
| ZnO | 0,0 - 0,4 |
| ZrO2 | 1,3 - 2,6 |
| P2O5 | 0,0 - 0,5 |
| Fe2O3 | 0,003- 0,100 |
| SnO2 | 0,0 - 1,0 |
| CeO2 | 0,004 - 0,2 |

Bei der erfindungsgemäßen Verbundglaskombination haben sich Zwischenscheiben mit einer Dicke im Bereich ≥ 4 mm als besonders geeignet erwiesen, um den Impakt des Geschosses ausreichend zu brechen.

Nachstehend werden einige Ausführungsbeispiele für erfindungsgemäße durchschusshemmende Verbundgläser aufgelistet:

### Aufbau 1 - Durchschusshemmung BR 6 NS nach DIN EN 1063

**Bauteilabmessung 1000 mm x 2200 mm**

| LNr | Dicke | Material |
|---|---|---|
| 1 | 4 mm | Borosilikatglas Boro 33 - Deckscheibe |
| 2 | 1,52 mm | PVB-Folie |
| 3 | 6 mm | Borosilikatglas Boro 33 - Zwischenscheibe |
| 4 | 0,76 mm | PVB-Folie |
| 5 | 6 mm | Borosilikatglas Boro 33 - Zwischenscheibe |
| 6 | 0,76 mm | PVB-Folie |
| 7 | 6 mm | Borosilikatglas Boro 40 - Zwischenscheibe |
| 8 | 0,76 mm | PVB-Folie |
| 9 | 8 mm | Borosilikatglas Boro 40 - Zwischenscheibe |
| 10 | 0,76 mm | PVB-Folie |
| 11 | 10 mm | Borosilikatglas Boro 40 - Zwischenscheibe |
| 12 | 0,76 mm | PVB-Folie |
| 13 | 12 mm | Borosilikatglas Boro 40 - Zwischenscheibe |
| 14 | 0,76 mm | PVB-Folie |
| 15 | 4 mm | LAS 80 (chemische Vorspannung ≥ 250 N/mm²) - Abschlussscheibe |

**Laminatherstellung:**

| | |
|---|---|
| Prinzip: | Sackverfahren; Autoklavfertigung |
| Prozessparameter: | Gesamtdauer: 8 Std. Max. Temperatur: 150°C, |
| | Max. Druck: 5 bar |

Prüfung der Widerstandsklasse gegen Beschuss nach EN 1063: Ergebnis BR 6 NS

### Aufbau 2 - Durchschusshemmung BR 2 NS nach DIN EN 1063 und Sprengwirkungshemmung ER 4 NS nach DIN EN 13541

**Bauabteilabmessung 900 mm x 1100 mm**

| LNr | Dicke | Material |
|---|---|---|
| 1 | 5 mm | Borosilikatglas - Deckscheibe |
| 2 | 0,38 mm | PVB-Folie |
| 3 | 7,5 mm | Borosilikatglas - Zwischenscheibe |
| 4 | 0,38 mm | PVB-Folie |
| 5 | 5 mm | Borosilikatglas - Zwischenscheibe |
| 6 | 0,76 mm | PVB-Folie |
| 7 | 5 mm | PYRAN® S - Abschlussscheibe |

**Laminatherstellung:**

| | |
|---|---|
| Prinzip: | Sackverfahren; Autoklavfertigung |
| Prozessparameter: | Gesamtdauer: 9 Std. Max. Temperatur: 145°C, |
| | Max. Druck: 5 bar |

Prüfung der Widerstandsklasse gegen Beschuss nach EN 1063: Ergebnis BR 2 NS
Prüfung der Widerstandsklasse gegen Sprengwirkung nach EN 13541: Ergebnis ER 4 NS

### Aufbau 3 - Durchschusshemmung BR 7 NS nach DIN EN 1063

**Bauteilabmessung 500 mm x 500 mm**

| LNr | Dicke | Material | [%] | [%] Summen | |
|---|---|---|---|---|---|
| 1 | 7,5 mm | Borosilikatglas - Deckscheibe | 11,8 | 11,8 | 100,0 |
| 2 | 0,38 mm | PVB-Folie | 0,6 | 12,4 | 88,2 |
| 3 | 7,5 mm | Borosilikatglas - Zwischenscheibe | 11,8 | 24,3 | 87,6 |
| 4 | 0,38 mm | PVB-Folie | 0,6 | 24,9 | 75,7 |
| 5 | 7,5 mm | Borosilikatglas - Zwischenscheibe | 11,8 | 36,7 | 75,1 |
| 6 | 0,76 mm | PVB-Folie | 1,2 | 37,9 | 63,3 |
| 7 | 9 mm | Borosilikatglas - Zwischenscheibe | 14,2 | 52,1 | 62,1 |
| 8 | 0,38 mm | PVB-Folie | 0,6 | 52,7 | 47,9 |
| 9 | 7,5 mm | Borosilikatglas - Zwischenscheibe | 11,8 | 64,5 | 47,3 |
| 10 | 0,38 mm | PVB-Folie | 0,6 | 65,1 | 35,5 |
| 11 | 5 mm | Borosilikatglas - Zwischenscheibe | 7,9 | 73,0 | 34,9 |
| 12 | 0,76 mm | PVB-Folie | 1,2 | 74,2 | 27,0 |
| 13 | 8 mm | AS 87 - Zwischenscheibe | 12,6 | 86,8 | 25,8 |
| 14 | 0,38 mm | PVB-Folie | 0,6 | 87,4 | 13,2 |
| 15 | 8 mm | AS 87 - Abschlussscheibe | 12,6 | 100,0 | 12,6 |
| Summe | 63,42 | | 100 | | |

**Laminatherstellung:**

| | |
|---|---|
| Prinzip: | Sackverfahren; Autoklavfertigung |
| Prozessdauer: | Gesamtdauer: 8 Std. Max. Temperatur: 150°C, |
| | Max. Druck: 5 bar |

Prüfung der Widerstandsklasse gegen Beschuss nach EN 1063: Ergebnis BR 7 NS

### Aufbau 4 - Durchschusshemmung BR 6 NS nach DIN EN 1063

**Bauteilabmessung 500 mm x 500 mm**

| LNr | Dicke | Material | [%] | [%] Summen | |
|---|---|---|---|---|---|
| 1 | 9 mm | Borosilikatglas - Zwischenscheibe | 17,8 | 17,8 | 100,0 |
| 2 | 0,76 mm | PVB-Folie | 1,5 | 19,3 | 82,2 |
| 3 | 9 mm | Borosilikatglas - Zwischenscheibe | 17,8 | 37,0 | 80,7 |
| 4 | 0,38 mm | PVB-Folie | 0,8 | 37,8 | 63,0 |
| 5 | 9 mm | Borosilikatglas - Zwischenscheibe | 17,8 | 55,5 | 62,2 |
| 6 | 0,38 mm | PVB-Folie | 0,8 | 56,3 | 44,5 |
| 7 | 8 mm | AS 87 - Zwischenscheibe | 15,8 | 72,1 | 43,7 |
| 8 | 0,76 mm | PVB-Folie | 1,5 | 73,6 | 27,9 |
| 9 | 8 mm | AS 87 - Zwischenscheibe | 15,8 | 89,4 | 26,4 |
| 10 | 0,38 mm | PVB-Folie | 0,8 | 90,1 | 10,6 |
| 11 | 5 mm | AS 87 - Abschlussscheibe | 9,9 | 100,0 | 9,9 |
| Summe | 50,66 | | 100 | | |

**Laminatherstellung:**

| | |
|---|---|
| Prinzip: | Sackverfahren; Autoklavfertigung |
| Prozessparameter: | Gesamtdauer: 8 Std. Max. Temperatur: 145°C, |
| | Max. Druck: 6 bar |

Prüfung der Widerstandsklasse gegen Beschluss nach EN 1063: Ergebnis BR 6 NS

In den vorstehend beschriebenen Aufbauten ist als Borosilikatglas eine handelsübliche Glasart verwendet, wie sie beispielsweise unter dem Handelsnamen BOROFLOAT® 33 und BOROFLOAT® 40 von der Schott AG beziehbar ist. Als AS87 und LAS80 werden chemisch vorgespannte Glasarten beschrieben, wie sie unter den Handelsnamen SCHOTT® AS87 und SCHOTT® LAS80 von der Schott AG bezogen werden können und im Übrigen auch in Anspruch 9 beschrieben sind.

PYRAN® S und PYRAN® white sind Handelsnamen von der Schott AG beziehbarer vorgespannter Borosilikatgläser.

Bei allen vorbeschriebenen Aufbauten handelt es sich bei den verwendeten Borosilikatgläsern stets um nicht vorgespannte Gläser. Insbesondere ist die Deckscheibe von einem nicht vorgespannten Glas gebildet. Dies hat den Vorteil, dass bei einem Beschussversuch gemäß DIN EN 1063, bei dem ein Beschussdreieck gebildet wird, der erste Treffer die Deckscheibe nicht stark zersplittert. Insbesondere entsteht kein Splitterbild, das sich in den Bereich erstreckt, wo die Folgetreffer auftreten. Damit wird eine hohe Beschusssicherheit geboten.

In den Aufbauten sind für die Abschussscheibe stets vorgespannte Gläser mit einer Dicke > 3 mm (chemisch vorgespannt) eingesetzt. Ab diesen Glasdicken wird eine hohe Sicherheit gegen rückseitigen Splitterabgang erzielt, wie dies den vorstehenden Tabellen entnehmbar ist.

In den Aufbauten 1 und 2 ist nur eine vorgespannte Scheibe verwendet (Abschlussscheibe).

Aufbau 3 und 4 verwendet benachbart zu der vorgespannten Abschlussscheibe eine weitere vorgespannte Zwischenscheibe (AS 87 - Zwischenscheibe). Prinzipiell können auch weitere oder alle Zwischenscheiben vorgespannt sein. Es ist allerdings vorteilhaft, wenn alle vorgespannten Zwischenscheiben auf der Zugseite des Verbundglases angeordnet sind. Sie sollten mithin der Angriffseite abgewandt hinter der Mittelquerebene des Verbundglases angeordnet sein. Dort können sie optimal die auftretenden Biegespannungen im Verbundglas bei Geschosseinschlag abbauen. Aus gleichem Grund sollte auch die Abschlussscheibe stets bei den erfindungsgemäßen Verbundgläsern vollständig hinter der Mittelquerebene angeordnet sein.

Die vorgespannten Glasteile sollten sich also maximal bis zur halben Gesamt-Bauteildicke des Verbundglases erstrecken. Es hat sich gezeigt, dass eine Erstreckung der vorgespannten Glasteile bis zu einem Drittel der Gesamt-Bauteildicke bereits hervorragende Beschusssicherheit bietet und auch gegen Sprengeinwirkung zuverlässig schützt.

Die Erfindung wird anhand von in den Zeichnungen dargestellten Ausführungsbeispielen näher erläutert.

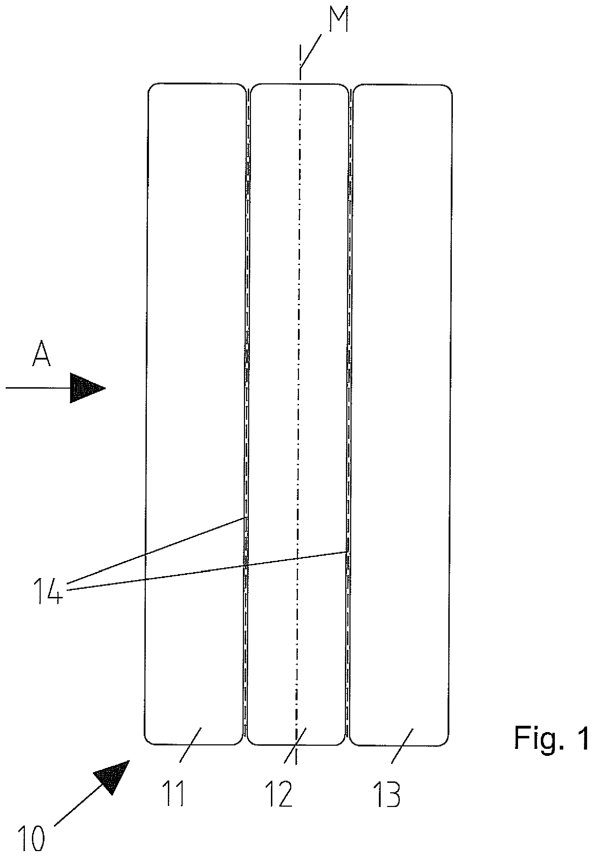

Figur 1 zeigt in schematischer Darstellung und in Seitenansicht ein durchschusshemmendes Verbundglas 10, das aus drei Glasscheiben zusammengesetzt ist. Dabei ist der Angriffseite A zugekehrt, also der Seite, die dem Beschuss ausgesetzt ist, eine Deckscheibe 11 vorgesehen, die mittels einer Zwischenscheibe 12 hinterlegt ist. An die Zwischenscheibe 12 schließt sich rückseitig, der Beschussseite A abgewandt, eine Abschlussscheibe 13 an. Diese drei Glasscheiben (Deckscheibe 11, Zwischenscheibe 12 und Abschlussscheibe 13) sind mittels Verbundschichten 14 miteinander verbunden. Dabei sind die Verbundschichten 14 von biegeschlaffen Folien, vorzugsweise Polyvinylbutyral-Folien, gebildet. Die Verbundschichten 14 werden im Autoklavprozess erwärmt und die Glasscheiben unter Druck aneinander gepresst. Auf diese Weise können die Glasscheiben miteinander verklebt werden.

Während die Deckscheibe 11 und die Zwischenscheibe 12 aus nicht vorgespanntem Glas bestehen, ist die Abschlussscheibe 13 von einem chemisch vorgespannten Glasmaterial gebildet. Wie die Figur 1 erkennen lässt, ist die der Beschussseite A abgewandte Seite der Abschlussscheibe 13 weder mit einer Beschichtung versehen, noch mittels einer Deckschicht hinterlegt.

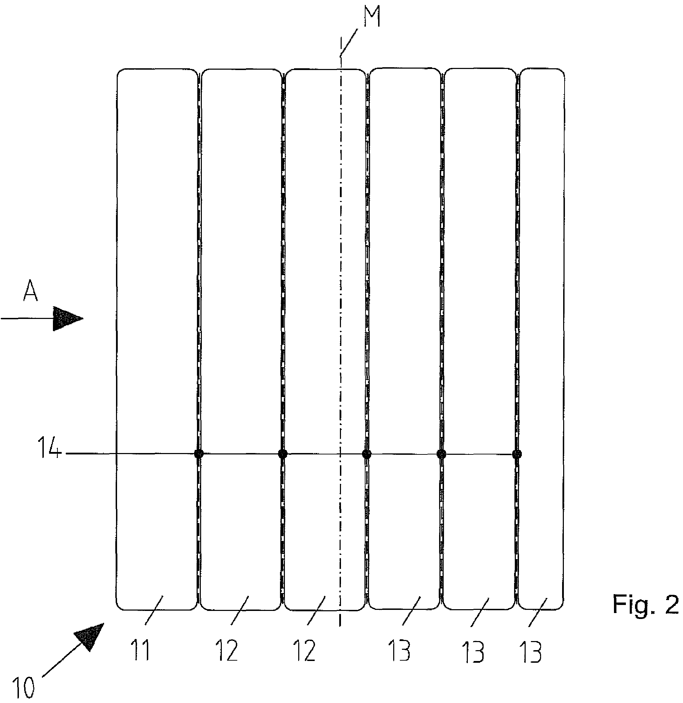

Figur 2 zeigt in schematischer Darstellung und in Seitenansicht das durchschusshemmende Verbundglas gemäß dem vorbeschriebenen Aufbau 6. Wie aus dieser Darstellung erkennbar ist, sind die beiden vorgespannten Gläser (AS 87) der Angriffseite A abgewandt hinter der Mittelquerebene M angeordnet, die sich parallel zu den beiden Endflächen des Verbundglases 10 erstreckt.

## Patentansprüche

1. Durchschusshemmendes Verbundglas (10) mit mindestens drei Glasscheiben, wobei eine der Glasscheiben als Deckscheibe (11) der Angriffseite (A) zugewandt ist, und eine Glasscheibe der Angriffseite (A) abgewandt als Abschlussscheibe (13) ausgebildet ist, wobei zwischen der Deckscheibe (11) und der Abschlussscheibe (13) eine oder mehrere Zwischenscheiben (12) angeordnet sind, wobei die Glasscheiben mittels Verbundschichten (14) miteinander verbunden sind, wobei die Deckscheibe (11) und/oder zumindest eine Zwischenscheibe (12) der Angriffseite (A) zugewandt vor der Mittelquerebene (11) angeordnet ist und von einem nicht vorgespannten Glaswerkstoff oder einer Glaskeramik gebildet werden
oder wobei die Deckscheibe (11) und alle Zwischenscheiben (12) von einem nicht vorgespannten Glaswerkstoff (11) oder einer Glaskeramik gebildet sind, wobei die Abschlussscheibe (13) als chemisch vorgespannte Glasscheibe ausgebildet ist,
wobei die Verbundschichten von biegeschlaffen und forminstabilen Folien und/oder Vergussmassen gebildet sind,
**dadurch gekennzeichnet,**
**dass** die Abschlussscheibe (13) eine Dicke im Bereich zwischen 3 bis 12 mm aufweist,
und **dass** bei der chemisch vorgespannten Abschlussscheibe (13) das Verhältnis (x) der Dicke der Abschlussscheibe (13), gemessen in mm, zur Biegezugfestigkeit der Abschlussscheibe (13), gemessen in N/mm², im Bereich zwischen 1:50 ≤ x ≤ 1:1000 gewählt ist.

2. Durchschusshemmendes Verbundglas (10) mit mindestens drei Glasscheiben, wobei eine der Glasscheiben als Deckscheibe (11) der Angriffseite (A) zugewandt ist, und eine Glasscheibe der Angriffseite (A) abgewandt als Abschlussscheibe (13) ausgebildet ist, wobei zwischen der Deckscheibe (11) und der Abschlussscheibe (13) eine oder mehrere Zwischenscheiben (12) angeordnet sind, wobei die Glasscheiben mittels Verbundschichten (14), nicht bestehend aus Polycarbonat, Polyurethan oder Polymethylmethacrylat, miteinander verbunden sind, wobei die Deckscheibe (11) und/oder zumindest eine Zwischenscheibe (12) der Angriffseite (A) zugewandt vor der Mittelquerebene (11) angeordnet ist und von einem nicht vorgespannten Glaswerkstoff oder einer Glaskeramik gebildet werden
oder wobei die Deckscheibe (11) und alle Zwischenscheiben (12) von einem nicht vorgespannten Glaswerkstoff (11) oder einer Glaskeramik gebildet sind, wobei die Abschlussscheibe (13) als chemisch vorgespannte Glasscheibe ausgebildet ist,
**dadurch gekennzeichnet,**
**dass** die Abschlussscheibe (13) eine Dicke im Bereich zwischen 3 bis 12 mm aufweist,
und **dass** bei der chemisch vorgespannten Abschlussscheibe (13) das Verhältnis (x) der Dicke der Abschlussscheibe (13), gemessen in mm, zur Biegezugfestigkeit der Abschlussscheibe (13), gemessen in N/mm², im Bereich zwischen 1:50 ≤ x ≤ 1:1000 gewählt ist.

3. Durchschusshemmendes Verbundglas (10) nach Anspruch 1 oder 2,
**dadurch gekennzeichnet,**
**dass** auf die Abschlussscheibe (13) außenseitig keine Folie und/oder ein Film aufgebracht ist, so dass das Glasmaterial der Abschlussscheibe (13) das Verbundglas (10) abschließt.

4. Durchschusshemmendes Verbundglas (10) nach einem der Ansprüche 1 bis 3,
**dadurch gekennzeichnet,**
**dass** die Deckscheibe (11) und wenigstens eine Zwischenscheibe (12) eine größere Dicke als die Abschlussscheibe (13) aufweisen.

5. Durchschusshemmendes Verbundglas (10) nach einem der Ansprüche 1 bis 4,
**dadurch gekennzeichnet,**
**dass** die Glasscheiben (Deckscheibe (11), Zwischenscheibe (12), Abschlussscheibe (13)) von einem Borosilikatglas, einem Kalknatronglas, einem Aluminiumsilikatglas und/oder einem Lithiumaluminosilikatglas gebildet sind, und/oder
**dass** alle Glasscheiben aus demselben Glasmaterial, vorzugsweise Borosilikatglas, gebildet sind.

6. Durchschusshemmendes Verbundglas (10) nach einem der Ansprüche 1 bis 5,
**dadurch gekennzeichnet,**
**dass** wenigstens eine Verbundschicht (14) von einer oder mehreren Folien, bestehend insbesondere aus Polyvinylbutyral, gebildet ist.

7. Durchschusshemmendes Verbundglas (10) nach einem der Ansprüche 1 bis 6,
**dadurch gekennzeichnet,**
**dass** wenigstens eine Verbundschicht (14) eine Dicke kleiner als 2 mm, insbesondere eine Dicke kleiner als 1 mm, aufweist.

8. Durchschusshemmendes Verbundglas (10) nach einem der Ansprüche 1 bis 7,
**dadurch gekennzeichnet,**
**dass** bei der chemisch vorgespannten Abschlussscheibe (13) das Verhältnis (x) der Dicke der Abschlussscheibe (13), gemessen in mm, zur Biegezugfestigkeit der Abschlussscheibe (13), gemessen in N/mm², im Bereich zwischen 1:100 ≤ x ≤ 1:200 gewählt ist.

9. Durchschusshemmendes Verbundglas (10) nach einem der Ansprüche 1 bis 8, **dadurch gekennzeichnet,**
**dass** die Glaszusammensetzung (Mol.-%) der Abschlussscheibe (13) wie folgt gewählt ist:
**Aluminosilikatglas**
| | |
|---|---|
| SiO₂ | 63 - 67,5 |
| B₂O₃ | 0,0 - 7,0 |
| Al₂O₃ | 10 - 14,0 |
| Na₂O | 8,5 - 15,5 |
| K₂O | 0,0 - 4,0 |
| MgO | 0 - 9,0 |
| CaO + SrO + ZnO | 0 - 2,5 |
| TiO₂ + ZrO₂ | 0 - 1,5 |
| CeO₂ | 0,0 - 0,5 |
| As₂O₃ + Sb₂O₃ | 0,0 - 0,4 |
| SnO₂ | 0,05 - 0,5 |
| F | 0,0 - 1,0 |
wobei bevorzugt folgende molare Verhältnisse gelten:
| | |
|---|---|
| SiO₂/Al₂O₃ | 5,0 - 6,8 |
| Na₂O/K₂O | 2,1 - 12,0 |
| Al₂O3/K₂O | 2,5 - 12,0 |
| Al₂O₃/Na₂O | 0,6 - 1,5 |
| (Na₂O + K₂O)/(MgO + CaO + SrO) | 0,95 - 6,5 |

10. Durchschusshemmendes Verbundglas (10) nach einem der Ansprüche 1 bis 9,
**dadurch gekennzeichnet,**
**dass** die Dicke wenigstens einer Zwischenscheibe (12) im Bereich ≥ 4mm beträgt.

11. Durchschusshemmendes Verbundglas nach einem der Ansprüche 1 bis 10,
**dadurch gekennzeichnet,**
**dass** wenigstens eine Zwischenscheibe (12) als thermisch oder chemisch vorgespannte Glasscheibe ausgebildet ist.

12. Durchschusshemmendes Verbundglas nach Anspruch 11,
**dadurch gekennzeichnet,**
**dass** die Abschlussscheibe (13) und/oder alle weiteren thermisch und/oder chemisch vorgespannten Zwischenscheiben (12) der Angriffseite (A) abgewandt hinter der Mittelebene (11) des Verbundglases (10) angeordnet sind, welche parallel zu den beiden von der Deckscheibe (11) und der Abschlussscheibe (14) gebildeten Endflächen liegt.

13. Durchschusshemmendes Verbundglas nach einem der Ansprüche 1 bis 12,
**dadurch gekennzeichnet,**
**dass** die Summe der Dicken der Abschlussscheibe (13), der thermisch und/oder chemisch vorgespannten Zwischenscheiben (12) und der Verbundschichten (14) kleiner oder gleich der halben Gesamtdicke des Verbundglases (10), besonders bevorzugt kleiner oder gleich 1/3 der Gesamtdicke des Verbundglases (10) beträgt.

## Claims

1. A bullet-resistant laminated glass (10) having at least three sheets of glass, wherein one of the sheets of glass faces the impact side (A) as a cover sheet (11) and one sheet of glass facing away from the impact side (A) is formed as a closure sheet (13), wherein one or more intermediate sheets (12) are arranged between the cover sheet (11) and the closure sheet (13), wherein the sheets of glass are connected to one another by means of composite layers (14), wherein the cover sheet (11) and/or at least one intermediate sheet (12) facing the impact side (A) is arranged in front of the central transverse plane (11) and is formed from a non-tempered glass material or a glass ceramic,
or wherein the cover sheet (11) and all the intermediate sheets (12) are formed from a non-tempered glass material (11) or a glass ceramic, wherein the closure sheet (13) is formed as a chemically tempered sheet of glass,
wherein the composite layers are formed from flaccid and dimensionally unstable films and/or casting materials,
**characterised in that**
the closure sheet (13) has a thickness in the range between 3 to 12 mm,
and **in that** in the case of the chemically tempered closure sheet (13) the ratio (x) of the thickness of the closure sheet (13), measured in mm, to the bending tensile strength of the closure sheet (13), measured in N/mm², is selected to be in the range between 1:50 ≤ x ≤ 1:1000.

2. Bullet-resistant laminated glass (10) having at least three sheets of glass, wherein one of the sheets of glass faces the impact side (A) as a cover sheet (11) and one sheet of glass facing away from the impact side (A) is formed as a closure sheet (13), wherein one or more intermediate sheets (12) are arranged between the cover sheet (11) and the closure sheet (13), wherein the sheets of glass are connected to one another by means of composite layers (14) not consisting of polycarbonate, polyurethane or polymethyl methacrylate, wherein the cover sheet (11) and/or at least one intermediate sheet (12) facing the impact side (A) is arranged in front of the central transverse plane (11) and is formed from a non-tempered glass material or a glass ceramic,
or wherein the cover sheet (11) and all the intermediate sheets (12) are formed from a non-tempered glass material (11) or a glass ceramic,
wherein the closure sheet (13) is designed as a chemically tempered sheet of glass, **characterised in that**
the closure sheet (13) has a thickness in the range between 3 to 12 mm,
and **in that** in the case of the chemically tempered closure sheet (13) the ratio (x) of the thickness of the closure sheet (13), measured in mm, to the bending tensile strength of the closure sheet (13), measured in N/mm², is selected to be in the range between 1:50 ≤ x ≤ 1:1000.

3. The bullet-resistant laminated glass (10) according to Claim 1 or 2,
**characterised in that**
no film is applied to the outside of the closure sheet (13), and/or a film is applied so that the glass material of the closure sheet (13) closes the laminated glass (10).

4. The bullet-resistant laminated glass (10) according to any one of Claims 1 to 3,
**characterised in that**
the cover sheet (11) and at least one intermediate sheet (12) have a greater thickness than the closure sheet (13).

5. The bullet-resistant laminated glass (10) according to any one of Claims 1 to 4,
**characterised in that**
the sheets of glass (cover sheet (11), intermediate sheet (12), closure sheet (13)) are formed from a borosilicate glass, a soda-lime glass, an aluminium silicate glass and/or a lithium aluminosilicate glass, and/or
**in that** all sheets of glass are made from the same glass material, preferably borosilicate glass.

6. The bullet-resistant laminated glass (10) according to any one of Claims 1 to 5,
**characterised in that**
at least one composite layer (14) is formed from one or more films, consisting in particular of polyvinyl butyral.

7. The bullet-resistant laminated glass (10) according to any one of Claims 1 to 6,
**characterised in that**
at least one composite layer (14) has a thickness of less than 2 mm, in particular a thickness of less than 1 mm.

8. The bullet-resistant laminated glass (10) according to any one of Claims 1 to 7,
**characterised in that**
in the chemically tempered closure sheet (13), the ratio (x) of the thickness of the closure sheet (13), measured in mm, to the bending tensile strength of the closure sheet (13), measured in N/mm², is selected so as to be in the range between 1:100 ≤ x ≤ 1:200.

9. The bullet-resistant laminated glass (10) according to any one of Claims 1 to 8,
**characterised in that**
the glass composition (mol%) of the closure sheet (13) is selected to be as follows:
**aluminosilicate glass**
| | |
|---|---|
| SiO₂ | 63-67.5 |
| B₂O₃ | 0.0-7.0 |
| Al₂O₃ | 10-14.0 |
| Na₂O | 8.5-15.5 |
| K₂O | 0.0-4.0 |
| MgO | 0-9.0 |
| CaO + SrO + ZnO | 0-2.5 |
| TiO₂ + ZrO₂ | 0-1.5 |
| CeO₂ | 0.0-0.5 |
| As₂O₃ + Sb₂O₃ | 0.0-0.4 |
| SnO₂ | 0.05-0.5 |
| F | 0.0-1.0 |
wherein the following molar ratios preferably apply:
| | |
|---|---|
| SiO₂/Al₂O₃ | 5.0-6.8 |
| Na₂O/K₂O | 2.1-12.0 |
| Al₂O₃/K₂O | 2.5-12.0 |
| Al₂O₃/Na₂O | 0.6-1.5 |
| (Na₂O + K₂O)/(MgO + CaO + SrO) | 0.95-6.5 |

10. The bullet-resistant laminated glass (10) according to any one of Claims 1 to 9,
**characterised in that**
the thickness of at least one intermediate sheet (12) is in the range ≥ 4 mm.

11. The bullet-resistant laminated glass according to any one of Claims 1 to 10,
**characterised in that**
at least one intermediate sheet (12) is designed as a thermally or chemically tempered sheet of glass.

12. The bullet-resistant laminated glass according to Claim 11,
**characterised in that**
the closure sheet (13) and/or all further thermally and/or chemically tempered intermediate sheets (12) facing away from the impact side (A) are arranged behind from the central plane (11) of the laminated glass (10), which is parallel to the two end faces formed from the cover sheet (11) and the closure sheet (14).

13. The bullet-resistant laminated glass according to any one of Claims 1 to 12,
**characterised in that**
the sum of the thicknesses of the closure sheet (13), the thermally and/or chemically tempered intermediate sheets (12) and the composite layers (14) is less than or equal to half the total thickness of the laminated glass (10), particularly preferably less than or equal to 1/3 of the total thickness of the laminated glass (10).

## Revendications

1. Vitrage de sécurité anti-balles (10) avec au moins trois plaques de verre, l'une des plaques de verre faisant face au côté d'attaque (A) en tant que plaque de couverture (11) et une plaque de verre opposée au côté d'attaque (A) étant conçue comme une plaque d'extrémité (13), dans lequel entre la plaque de couverture (11) et la plaque d'extrémité (13) une ou plusieurs plaques intermédiaires (12) sont disposées, les plaques de verre étant reliées les unes aux autres au moyen de couches composites (14), la plaque de couverture (11) et/ou au moins une plaque intermédiaire (12) faisant face au côté d'attaque (A) sont disposées devant le plan transversal central (11) et sont formées d'un matériau en verre non trempé ou une vitrocéramique
ou dans lequel la plaque de couverture (11) et toutes les plaques intermédiaires (12) sont formées d'un matériau en verre non trempé (11) ou d'une vitrocéramique, la plaque d'extrémité (13) étant conçue comme une plaque de verre trempé chimiquement, dans lequel les couches composites sont formées de feuilles et/ou de masses de coulée souples et instables dimensionnellement,
**caractérisé en ce que**
la plaque d'extrémité (13) a une épaisseur comprise entre 3 et 12 mm,
et **en ce que** concernant la plaque d'extrémité (13) trempée chimiquement, le rapport (x) de l'épaisseur de la plaque d'extrémité (13), mesurée en mm, à la résistance à la traction en flexion de la plaque d'extrémité (13), mesurée en N/mm², est choisi dans la plage comprise entre 1:50 ≤ x ≤ 1:1000.

2. Vitrage de sécurité anti-balles (10) avec au moins trois plaques de verre, l'une des plaques de verre faisant face au côté d'attaque (A) en tant que plaque de couverture (11) et une plaque de verre opposée au côté d'attaque (A) étant conçue comme une plaque d'extrémité (13), dans lequel entre la plaque de couverture (11) et la plaque d'extrémité (13) une ou plusieurs plaques intermédiaires (12) sont disposées, les plaques de verre étant reliées les unes aux autres au moyen de couches composites (14), ne consistant pas en un polycarbonate, un polyuréthanne ni un poly(méthacrylate de méthyle), la plaque de couverture (11) et/ou au moins une plaque intermédiaire (12) faisant face au côté d'attaque (A) étant disposées devant le plan transversal central (11) et étant formées d'un matériau en verre non trempé ou une vitrocéramique
ou dans lequel la plaque de couverture (11) et toutes les plaques intermédiaires (12) sont formées d'un matériau en verre non trempé (11) ou d'une vitrocéramique,
la plaque d'extrémité (13) étant conçue comme une plaque de verre trempée chimiquement,
**caractérisé en ce que**
la plaque d'extrémité (13) a une épaisseur comprise entre 3 et 12 mm,
et **en ce que** concernant la plaque d'extrémité (13) trempée chimiquement, le rapport (x) de l'épaisseur de la plaque d'extrémité (13), mesurée en mm, à la résistance à la traction en flexion de la plaque d'extrémité (13), mesurée en N/mm², est choisi dans la plage comprise entre 1:50 ≤ x ≤ 1:1000.

3. Vitrage de sécurité anti-balles (10) selon la revendication 1 ou 2,
**caractérisé en ce que**
aucune feuille et/ou film n'est appliqué sur la face extérieure de la plaque d'extrémité (13), de sorte que le matériau en verre de la plaque d'extrémité (13) clôture le vitrage de sécurité (10).

4. Vitrage de sécurité anti-balles (10) selon une des revendications 1 à 3,
**caractérisé en ce que**
la plaque de couverture (11) et au moins une plaque intermédiaire (12) ont une épaisseur supérieure à celle de la plaque d'extrémité (13).

5. Vitrage de sécurité anti-balles (10) selon une des revendications 1 à 4,
**caractérisé en ce que**
les plaques de verre (plaque de couverture (11), plaque intermédiaire (12), plaque d'extrémité (13)) sont constituées d'un verre borosilicaté, d'un verre sodocalcique, d'un verre silicate d'aluminium et/ou d'un verre aluminosilicate de lithium et/ou en ce que toutes les plaques de verre sont composées du même matériau de verre, de préférence du verre borosilicaté.

6. Vitrage de sécurité anti-balles (10) selon une des revendications 1 à 5,
**caractérisé en ce que**
au moins une couche composite (14) est formée par une ou plusieurs feuilles, constituées notamment de polyvinylbutyral.

7. Vitrage de sécurité anti-balles (10) selon une des revendications 1 à 6,
**caractérisé en ce que**
au moins une couche composite (14) a une épaisseur inférieure à 2 mm, en particulier une épaisseur inférieure à 1 mm.

8. Vitrage de sécurité anti-balles (10) selon une des revendications 1 à 7,
**caractérisé en ce que**
concernant la plaque d'extrémité (13) trempée chimiquement, le rapport (x) de l'épaisseur de la plaque d'extrémité (13), mesurée en mm, à la résistance à la traction en flexion de la plaque d'extrémité (13), mesurée en N/mm², est choisi dans la plage comprise entre 1:100 ≤ x ≤ 1:200.

9. Vitrage de sécurité anti-balles (10) selon une des revendications 1 à 8,
**caractérisé en ce que**
la composition de verre (% en moles) de la plaque d'extrémité (13) est choisie comme suit :
**Verre aluminosilicate**
| | |
|---|---|
| SiO₂ | 63 à 67,5 |
| B₂O₃ | 0,0 à 7,0 |
| Al₂O₃ | 10 à 14,0 |
| Na₂O | 8,5 à 15,5 |
| K₂O | 0,0 à 4,0 |
| MgO | 0 à 9,0 |
| CaO + SrO + ZnO | 0 à 2,5 |
| TiO₂ + ZrO₂ | 0 à 1,5 |
| CeO₂ | 0,0 à 0,5 |
| As₂O₃ + Sb₂O₃ | 0,0 à 0,4 |
| SnO₂ | 0,05 à 0,5 |
| F | 0,0 à 1,0 |
dans lequel les rapports molaires suivants s'appliquent de préférence :
| | |
|---|---|
| SiO₂/Al₂O₃ | 5,0 à 6,8 |
| Na₂O/K₂O | 2,1 à 12,0 |
| Al₂O₃/K₂O | 2,5 à 12,0 |
| Al₂O₃/Na₂O | 0,6 à 1,5 |
| (Na₂O + K₂O)/(MgO + CaO + SrO) | 0,95 à 6,5 |

10. Vitrage de sécurité anti-balles (10) selon une des revendications 1 à 9,
**caractérisé en ce que**
l'épaisseur d'au moins une plaque intermédiaire (12) est dans la plage ≥ 4 mm.

11. Vitrage de sécurité anti-balles selon une des revendications 1 à 10,
**caractérisé en ce que**
au moins une plaque intermédiaire (12) est conçue comme une plaque de verre trempée thermiquement ou chimiquement.

12. Vitrage de sécurité anti-balles selon la revendication 11,
**caractérisé en ce que**
la plaque d'extrémité (13) et/ou toutes les autres plaques intermédiaires (12) trempées thermiquement et/ou chimiquement, opposées au côté d'attaque (A) sont disposées derrière le plan central (11) du vitrage de sécurité (10), lequel est parallèle aux deux faces terminales formées par la plaque de couverture (11) et par la plaque d'extrémité (14).

13. Vitrage de sécurité anti-balles selon une des revendications 1 à 12,
**caractérisé en ce que**
la somme des épaisseurs de la plaque d'extrémité (13), des plaques intermédiaires trempées thermiquement et/ou chimiquement (12) et des couches composites (14) est inférieure ou égale à la moitié de l'épaisseur totale du vitrage de sécurité (10), de manière particulièrement préférée inférieure ou égale à 1/3 de l'épaisseur totale du vitrage de sécurité (10).
